# EUROPEAN PATENT APPLICATION

(11) **EP 4 635 323 A1**
(43) Date of publication of application: **22.10.2025**
(21) Application number: 24170394.1
(22) Date of filing: 16.04.2024
(51) Int. Cl.: A24F 40/40, A24F 40/46, A24F 40/50, H02J 7/00, H02J 7/34

(54) **AEROSOL PROVISION DEVICE**

(71) Applicant: Nicoventures Trading Limited, London WC2R 3LA (GB)
(72) Inventor: HU, Yu, London, WC2R 3LA (GB); TAN, Chaou Choak, London, WC2R 3LA (GB); BRUTON, Connor, London, WC2R 3LA (GB); POYNTON, Simon, London, WC2R 3LA (GB)
(74) Representative: Cork, Robert

(57) **Abstract**

An aerosol provision device 200 for providing aerosol during a puff on the device comprises a first power source 201a to supply power to one or more aerosol generators 203 which may be included in a consumable 210 for generating the aerosol from an aerosol-generating material 211, the first power source comprising a supercapacitor. Control circuitry 202 is configured to provide a first power output to at least one of aerosol generators in a first mode of operation, and to provide a second power output to at least one of the aerosol generators in a second mode of operation, the first power output being higher than the second power output. The control circuitry is configured to provide the first power output from the supercapacitor 201a in the first mode of operation, and a second power source 201b may supply power to the aerosol generator in the second mode of operation.

## Description

### Technical Field

The present invention relates to an aerosol provision device.

### Background

Electronic aerosol provision systems such as electronic cigarettes (e-cigarettes) generally contain an aerosol-generating material, such as a reservoir of a source liquid containing a formulation, typically including nicotine, or a solid material such as a tobacco-based product, from which an aerosol is generated for inhalation by a user, for example through heat vaporisation. Thus, an aerosol provision system will typically comprise an aerosol generator, e.g. a heating element, arranged to aerosolise a portion of aerosol-generating material to generate an aerosol in an aerosol generation region of an air channel through the aerosol provision system. As a user inhales on the device and electrical power is supplied to the aerosol generator, air is drawn into the device through one or more inlet holes and along the air channel to the aerosol generation region, where the air mixes with the vaporised aerosol generator and forms a condensation aerosol. The air drawn through the aerosol generation region continues along the air channel to a mouthpiece, carrying some of the aerosol with it, and out through the mouthpiece for inhalation by the user.

Aerosol provision systems typically comprise a power source, for example a rechargeable power source such as a lithium-ion battery, for supplying power to the aerosol generator to generate the aerosol. However, the power delivery characteristics of conventional power sources may restrict the ability of the aerosol generator to generate aerosol. It would therefore be desirable to provide an aerosol provision system that is capable of more effectively providing power to an aerosol generator, for greater control over the aerosol characteristics.

### Summary of the Invention

According to a first aspect of the present disclosure, there is provided an aerosol provision device comprising: a first power source configured to supply power to one or more aerosol generators for generating an aerosol from an aerosol-generating material, the first power source comprising a supercapacitor; and control circuitry configured to provide a first power output to at least one of the one or more aerosol generators in a first mode of operation of the aerosol provision device and to provide a second power output to at least one of the one or more aerosol generators in a second mode of operation of the aerosol provision device, the first power output being higher than the second power output, wherein the control circuitry is configured to provide the first power output from the supercapacitor to said at least one of the one or more aerosol generators in the first mode of operation.

In some embodiments according to the first aspect, the aerosol provision device comprises a second power source configured to supply power to the one or more aerosol generators for generating the aerosol from the aerosol-generating material, wherein the control circuitry is configured to provide the second power output from the second power source to said at least one of the one or more aerosol generators in the second mode of operation.

In some embodiments according to the first aspect, in the second mode of operation, the control circuitry is configured to provide the second power output to said at least one of the one or more aerosol generators solely from the second power source.

In some embodiments according to the first aspect, in the first mode of operation, the control circuitry is configured to provide the first power output to said at least one of the one or more aerosol generators from both the first power source and the second power source.

In some embodiments according to the first aspect, in the first mode of operation, the control circuitry is configured to provide the first power output to said at least one of the one or more aerosol generators solely from the first power source.

In some embodiments according to the first aspect, the second power source comprises a battery.

In some embodiments according to the first aspect, the battery is a rechargeable lithium-ion battery.

In some embodiments according to the first aspect, said one or more aerosol generators comprise a first aerosol generator and a second aerosol generator, wherein the control circuitry is configured to provide the first power output to the first aerosol generator in the first mode of operation and to provide the second power output to the second aerosol generator in the second mode of operation.

In some embodiments according to the first aspect, the first aerosol generator is a first type of aerosol generator and the second aerosol generator is a second, different, type of aerosol generator.

In some embodiments according to the first aspect, the one or more aerosol generators are configured to generate said aerosol at a rate dependent on a level of power received by the one or more aerosol generators, such that a rate at which said aerosol is generated in the first mode of operation is higher than a rate at which said aerosol is generated in the second mode of operation.

In some embodiments according to the first aspect, the control circuitry is configured to provide the first power output to said at least one of the one or more aerosol generators in the first mode of operation during a first time period within a puff on the aerosol provision device or within a heating session, and is configured to provide the second power output to said at least one of the one or more aerosol generators in the second mode of operation during a second time period within said puff or said heating session, the first time period preceding the second time period.

In some embodiments according to the first aspect, the control circuitry is configured to switch from the first operating mode to the second operating mode in dependence on a temperature of one of the one or more aerosol generators.

In some embodiments according to the first aspect, the control circuitry is configured to switch from the first operating mode to the second operating mode in response to the temperature of one of the one or more aerosol generators being greater than or equal to a threshold temperature.

In some embodiments according to the first aspect, the control circuitry is configured to switch from the first operating mode to the second operating mode after a predetermined time period.

In some embodiments according to the first aspect, the supercapacitor is a hybrid supercapacitor.

In some embodiments according to the first aspect, the hybrid supercapacitor is a lithium-ion capacitor (LIC).

In some embodiments according to the first aspect, at least one of the one of more aerosol generators is a heater configured to heat the aerosol-generating material to form the aerosol.

In some embodiments according to the first aspect, the heater is any one of the following: an induction heater, an electromagnetic radiation heater, a plasma heater, a microfluidic heater, a convection heater, a conduction heater, a resistive heater, a halogen heater, and a dielectric heater.

In some embodiments according to the first aspect, the resistive heater comprises a graphene heater or a ceramic heater.

In some embodiments according to the first aspect, the electromagnetic radiation heater comprises any one of the following: a laser heater, a non-laser optical heater, an infra-red heater, a radio-frequency heater, and a microwave frequency heater.

In some embodiments according to the first aspect, at least one of the one or more aerosol generators is configured to generate the aerosol from the aerosol-generating material without substantially heating the aerosol-generating material.

In some embodiments according to the first aspect, said one of the one or more aerosol generators is a vaporiser configured to subject the aerosol-generating material to the at least one of the following: vibration, pressure, electrostatic energy.

In some embodiments according to the first aspect, the vaporiser comprises an ultrasonic vaporiser or a surface acoustic wave vaporiser.

In some embodiments according to the first aspect, the aerosol-generating material comprises any one of the following: a solid, a liquid, a gel, a thin film, a foam, and a non-fibrous solid.

In some embodiments according to the first aspect, the supercapacitor is capable of being charged from a discharged state to a charged state in a charging time of less than or equal to 12 minutes, and in the charged state the supercapacitor is configured to store sufficient electrical charge to provide the second power output to said at least one of the one or more aerosol generators for no more than 200 puffs, or for no more than 80 puffs, or for no more than 50 puffs.

In some embodiments according to the first aspect, the charging time is less than or equal to 4 minutes.

In some embodiments according to the first aspect, a total energy storage capacity of the supercapacitor is less than or equal to 450 milliampere-hour, mAh.

In some embodiments according to the first aspect, the supercapacitor has an external dimension in a first direction of less than or equal to 16 mm. In some embodiments according to the first aspect, the external dimension in the first direction is less than or equal to 15, 14, 13, 12, 11 or 10 mm. In some embodiments according to the first aspect, the external dimension in the first direction is a diameter of the supercapacitor.

In some embodiments according to the first aspect, the total energy storage capacity of the supercapacitor is between 200 and 300 mAh.

In some embodiments according to the first aspect, the supercapacitor has a discharge capacity of no more than 200 mAh, or no more than 180 mAh.

In some embodiments according to the first aspect, the supercapacitor has a charge capacity of no more than 200 mAh, or no more than 150 mAh.

In some embodiments according to the first aspect, the aerosol provision device comprises circuitry configured to control a supply of electrical power to the supercapacitor during a charging operation, to charge the supercapacitor from a discharged state to a charged state, wherein the circuitry is configured to control the supply of electrical power to the supercapacitor during the charging operation so as to charge the supercapacitor at a C-rate greater than or equal to 25C, or greater than or equal to 35C, or greater than or equal to 50C.

In some embodiments according to the first aspect, the at least one supercapacitor is configured to be removeable and/or replaceable from the aerosol provision device.

In some embodiments according to the first aspect, the aerosol provision device is configured to repeatedly switch between the first operating mode and the second operating mode during a puff, or during a heating session.

In some embodiments according to the first aspect, the aerosol provision device comprises at least one of the one or more aerosol generators.

In some embodiments according to the first aspect, the aerosol provision device is configured to be releasably engageable with a consumable comprising the aerosol-generating material.

In some embodiments according to the first aspect, at least one of the one or more aerosol generators is included in the consumable.

According to a second aspect of the present disclosure, there is provided an aerosol provision system comprising the aerosol provision device according to the first aspect, and a consumable comprising the aerosol-generating material, the aerosol provision device being configured to be releasably engageable with the consumable.

According to a third aspect of the present disclosure, there is provided a method of operating an aerosol provision device comprising a first power source configured to supply power to one or more aerosol generators for generating an aerosol from an aerosol-generating material, the first power source comprising a supercapacitor, the method comprising: in a first mode of operation, providing a first power output from the supercapacitor to at least one of the one or more aerosol generators; and in a second mode of operation, providing a second power output to at least one of the one or more aerosol generators, the first power output being higher than the second power output.

According to a fourth aspect of the present disclosure, there is provided a computer program comprising instructions which, when executed by one or more processors, cause said one or more processors to carry out a method according to the third aspect.

According to a fifth aspect of the present disclosure, there is provided a non-transitory computer-readable storage medium having stored thereon a computer program according to the fourth aspect.

### Brief Description of the Drawings

Embodiments of the present invention will now be described, by way of example only, with reference to the accompanying drawings, in which:
Figure 1 is a block diagram of a non-combustible aerosol provision device, according to an example embodiment;
Figure 2 is a block diagram of a non-combustible aerosol provision device, according to an example embodiment;
Figure 3 is a block diagram of a system comprising the non-combustible aerosol provision device of Fig. 1 or Fig. 2 and an apparatus for recharging the aerosol provision device, according to an example embodiment;
Figure 4 schematically illustrates an electrode structure of a hybrid supercapacitor power source, according to an example embodiment;
Figure 5 is a flowchart showing a method of operating an aerosol provision device, according to an example embodiment;
Figure 6 is a flowchart showing a method of operating an aerosol provision device, according to an example embodiment;
Figure 7 is a flowchart showing a method of operating an aerosol provision device, according to an example embodiment;
Figure 8 schematically illustrates an aerosol provision device comprising a hybrid supercapacitor power source, according to an example embodiment;
Figure 9 is a table illustrating cell properties and test results for six different types of cells, including LIC hybrid supercapacitor cells according to example embodiments;
Figure 10 is a graph plotting the charging time versus the number of charging cycles for the six cells listed in Fig. 9;
Figure 11 is a graph plotting the charge capacity versus the number of charging cycles for the six cells listed in Fig. 9;
Figure 12 is a graph plotting the total puff count achieved from a full charge versus the number of charging cycles for the six cells listed in Fig. 9;
Figure 13 is a table listing charging rates (C-rates) that have been demonstrated for each of the six cells listed in Fig. 9; and
Figure 14 is a block diagram of a non-combustible aerosol provision device comprising a plurality of aerosol generators, according to an example embodiment.

### Detailed Description

In the following detailed description, only certain exemplary embodiments of the present invention have been shown and described, simply by way of illustration. As those skilled in the art would realise, the described embodiments may be modified in various ways, all without departing from the scope of the present invention. Accordingly, the drawings and description are to be regarded as illustrative in nature and not restrictive. Like reference numerals designate like elements throughout the specification.

As used herein, the term "delivery system" is intended to encompass systems that deliver at least one substance to a user, and includes non-combustible aerosol provision systems that release compounds from an aerosol-generating material without combusting the aerosol-generating material, such as electronic cigarettes, tobacco heating products, and hybrid systems to generate aerosol using a combination of aerosol-generating materials.

According to the present disclosure, a "combustible" aerosol provision system is one where a constituent aerosol-generating material of the aerosol provision system (or component thereof) is combusted or burned during use in order to facilitate delivery of at least one substance to a user. According to the present disclosure, a "non-combustible" aerosol provision system is one where a constituent aerosol-generating material of the aerosol provision system (or component thereof) is not combusted or burned in order to facilitate delivery of at least one substance to a user. The non-combustible aerosol provision system, or a non-combustible aerosol provision device thereof, may comprise a power source and a controller.

In some embodiments the delivery system is a non-combustible aerosol provision system, such as an electronic cigarette, also known as a vaping device or electronic nicotine delivery system (END), although it is noted that the presence of nicotine in the aerosol generating material is not a requirement. In some embodiments, the non-combustible aerosol provision system is an aerosol-generating material heating system, also known as a heat-not-burn system. An example of such a system is a tobacco heating system. In some embodiments, the non-combustible aerosol provision system is a hybrid system to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

Typically, the non-combustible aerosol provision system may comprise a non-combustible aerosol provision device and a consumable for use with the non-combustible aerosol provision device. A non-combustible aerosol provision device may also be referred to as a non-combustible aerosol generation device. In some embodiments, the disclosure relates to consumables comprising aerosol generating material and configured to be used with non-combustible aerosol provision devices. These consumables are sometimes referred to as articles throughout the disclosure. A consumable is an article comprising or consisting of aerosol-generating material, part or all of which is intended to be consumed during use by a user.

In some embodiments, the non-combustible aerosol provision system may comprise an area for receiving the consumable, an aerosol generator, an aerosol generation area, a housing, a mouthpiece, a filter and/or an aerosol-modifying agent.

In some embodiments, the consumable for use with the non-combustible aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent. A consumable may also comprise an aerosol generator, such as a heater, that emits heat to cause the aerosol-generating material to generate aerosol in use. The heater may, for example, comprise combustible material, a material heatable by electrical conduction, or a susceptor. In other embodiments, the aerosol-generating material may be provided in the non-combustible aerosol provision device itself rather than being provided in a physically separate consumable. In such embodiments, the non-combustible aerosol provision device may comprise an aerosol-generating material storage area for storing the aerosol-generating material.

In some embodiments, the substance to be delivered may be an aerosol-generating material or a material that is not intended to be aerosolised. As appropriate, either material may comprise one or more active constituents, one or more flavours, one or more aerosol-former materials, and/or one or more other functional materials.

In some embodiments, the substance to be delivered comprises an active substance. The active substance as used herein may be a physiologically active material, which is a material intended to achieve or enhance a physiological response. Aerosol-generating material is a material that is capable of generating aerosol, for example when heated, irradiated or energized in any other way. Aerosol-generating material may, for example, be in the form of a solid, liquid, gel, thin film, foam, or non-fibrous solid, any of which may or may not contain an active substance and/or flavourants.

The aerosol-generating material may comprise one or more active substances and/or flavours, one or more aerosol-former materials, and optionally one or more other functional materials.

The material may be present on or in a support, to form a substrate. The support may, for example, be or comprise paper, card, paperboard, cardboard, reconstituted material, a plastics material, a ceramic material, a composite material, glass, a metal, or a metal alloy. In some embodiments, the support comprises a susceptor. In some embodiments, the susceptor is embedded within the material. In some alternative embodiments, the susceptor is on one or either side of the material.

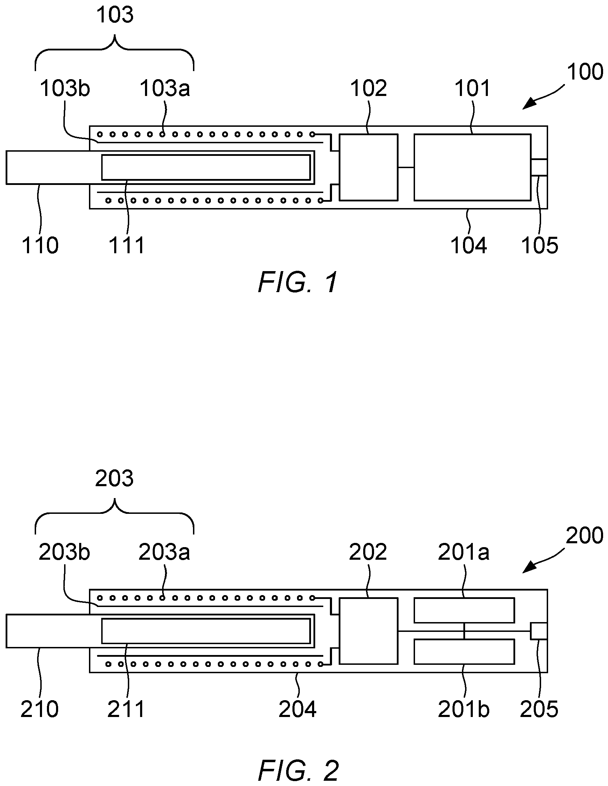

Referring now to Fig. 1, a block diagram of a rechargeable non-combustible aerosol provision device, indicated generally by the reference numeral 100, is illustrated in accordance with an example embodiment. The non-combustible aerosol provision device 100 comprises a power source 101, circuitry 102, at least one aerosol generator 103, a housing 104 and a charging interface 105. The power source 101 comprises a supercapacitor, for example a hybrid supercapacitor such as a lithium-ion capacitor (LIC). In some embodiments, the housing 104 may be elongate and substantially tubular in shape. Depending on the dimensions and proportions of the housing 104, in some example embodiments the non-combustible aerosol provision device 100 may have an appearance similar to that of a conventional cigarette, for example a king-size (KS) factory-made cigarette (FMC).

In the present embodiment the non-combustible aerosol provision device 100 is rechargeable, allowing the power source 101 to be recharged so that the device 100 can be re-used. However, in some embodiments the device 100 may be non-rechargeable, often referred to as a "disposable" or "single-use" device. In some such embodiments, the power source 101 may be physically capable of being recharged, but the device 100 may lack the necessary charging interface 105 and/or control circuitry 102 for the power source 101 to be recharged.

Continuing with reference to the embodiment of Fig. 1, in which the aerosol provision device 100 is configured to be rechargeable, the circuitry 102 may be configured to control a supply of electrical power to the power source 101 during a charging operation, to charge the power source 101 from a discharged state to a charged state (e.g. 80%, 90% or 100% charge). The discharged state may vary according to usage of the device 100, depending on how far the power source 101 has been discharged when a user connects the charging interface 105 to an external power source to begin charging the device 100. For example, the discharged state may be any state in which the output voltage of the power source 101 is greater than or equal to a minimum operating voltage threshold *Vₜ* required by a controller (e.g. a master control unit, MCU) in the device 100, since as soon as the output voltage of the power source 101 falls below that level (i.e. *Vₜ*) the device 100 will no longer be operable (i.e. preventing the power source 101 from being further discharged) until the power source 101 has been charged to a higher level. However, in some scenarios it is possible that in the discharged state the output voltage of the power source 101 may be less than the minimum operating voltage threshold *Vₜ* (e.g. due to a supercapacitor power source 101 self-discharging while the device 100 is switched off). The circuitry 102 may be configured to control the supply of electrical power to the power source 101 according to a charging profile in which one or more of a charging voltage, a charging current, and a charging C-rate varies over time during the charging operation. Accordingly, the circuitry 102 may also be referred to as "charging circuitry" or "charging control circuitry". In some example embodiments, the charging current may be selected according to the cell's capacity and a charging C-rate that is known to be supported by the cell. For example, for a cell with a capacity of 200 milliamp hours (mAh) that is known to support a charging C-rate up to 25C, the circuitry 102 may be configured to control the supply of electrical power to the power source 101 according to a charging profile in which the charging current is equal to or less than 5 Amperes, A (i.e. 0.2×25 = 5).

The charging profile may be configured specifically for the particular type of power source 101 used in the device 100. For example, in some example embodiments the power source 101 may be configured to be removable and replaceable. In some such embodiments, the circuitry 102 may be configured to store a plurality of charging profiles, each associated with a different type of power source 101. Upon replacement of the power source 101 with a replacement power source, the circuitry 102 may be configured to identify a type of the replacement power source (e.g. by communicating with the replacement power source to receive an identifier indicative of the power source type, or by communicating with a separate power source identification mechanism either local or remote to the non-combustible aerosol provision device 100). The circuitry 102 may then select one of the plurality of charging profiles associated with the identified type of the replacement power source during a subsequent charging operation, for more effective charging (e.g. faster and/or more reliable charging).

The non-combustible aerosol provision device 100 of the present embodiment is configured to receive a consumable 110 comprising aerosol-generating material 111 (e.g. a tobacco consumable 110, for example in the form of a tobacco stick). The power source 101 is rechargeable, and can be recharged using electrical energy received via the charging interface 105. The power source 101 provides power to the aerosol generator 103 to generate the aerosol, and may also provide power to other components of the non-combustible aerosol provision device 100 (e.g. active components within circuitry 102) during operation of the device 100. Depending on the embodiment, the charging interface 105 may comprise a wired interface or a wireless interface. In the case of wireless charging, the charging interface 105 may comprise a resonant receiver, for example in the form of an antenna. The antenna of the resonant receiver may be used to receive magnetic field energy for use in charging the power source 101 (e.g. under the control of the circuitry 102).

The housing 105 can be configured to contain, hold, or otherwise support some or all of the other components of the non-combustible aerosol provision device 100. The housing 105 may be formed of any suitable material, including but not limited to paper, card, paperboard, cardboard, reconstituted material, a plastics material, a ceramic material, a composite material (e.g. carbon fibre), glass, a metal, or a metal alloy. In some embodiments the housing 105 can be configured so as to allow one or more components of the non-combustible aerosol provision device 100 to be removed and replaced. For example, the housing 105 may comprise a moveable or removable portion (e.g. in the form of a panel, cover, cap or plug) to enable access to components such as the circuitry 102, the at least one power source 101 and/or the aerosol generator 103, potentially to allow such components to be removed and replaced to repair or upgrade the device 100, or to allow such components to be removed prior to disposal of the device 100 (e.g. to allow different materials used in the device 100 to be separated for disposal/recycling). In some embodiments, the housing 105 is configured to enable the power source 101 to be removed and replaced.

In the use of the device 100, the consumable 110 is inserted into a receiving portion of the housing 105, such that the consumable 110 may be heated by the aerosol generator 103 to generate an aerosol (and tobacco flavour, in the case of a tobacco consumable) for the user. When a user inhales at the end of the consumable 110, which may be referred to as a "puff", air is drawn into the device 100 through one or more air inlets and passes through the consumable 110, delivering the aerosol (and tobacco flavour, in the case of a tobacco consumable) to the user.

In the present embodiment, the aerosol generator 103 is an induction heater comprising an induction coil 103a and a susceptor 103b. In use, the circuitry 102 directs electrical energy from the power source 101 to the induction coil 103a, so as to cause a varying electrical current to flow through the induction coil 103a. This in turn creates a varying magnetic field which penetrates an electrically-conductive material of the susceptor 103b, causing magnetic hysteresis heating of the susceptor 103b. The consumable 110, and the aerosol-generating material 111 contained therein, is arranged to be heated by the susceptor 103b. In the present embodiment the susceptor 103b is provided in the device 100, for example within the housing 105. However, in other embodiments the susceptor 103b may be provided in the consumable 110.

Although in the present embodiment induction heating is used to generate an aerosol, in other embodiments a different mechanism may be used to generate the aerosol. For example, in some embodiments the non-combustible aerosol provision device 100 may still be configured to receive a consumable comprising tobacco (e.g. in the form of a tobacco stick) as shown in Fig. 1, but instead of an induction coil 103a and susceptor 103b the aerosol generator 103 may comprise a resistive heater. In embodiments in which tobacco is heated by a resistive heater, the aerosol generator 103 (i.e. the resistive heater) may be arranged so as to be in physical contact with at least some of the tobacco material contained in the consumable 110, when the consumable is received in the device 100. For example, this may be achieved by providing a resistive heater in the form of a protruding element, such as a spike or blade, that is pushed into the tobacco 111 in the process of inserting the consumable 110 into the device 100.

The non-combustible aerosol provision device 100 is described by way of example only. Many alternative aerosol provision devices may be used in example implementations of the principles described here. For example, instead of a tobacco heating system such as the device 100 illustrated in Fig. 1, in other embodiments a non-combustible aerosol provision device may be a vaping device in which an aerosol generating material (e.g. a liquid) is heated to generate the aerosol. The principles of the present disclosure are not limited to a particular type of aerosol provision device 100. That is to say, the aerosol provision device 100 may be arranged to aerosolise a solid, liquid or other aerosol-generating material via any suitable electrically powered or controller aerosol generator, such as a heater, a vibrating mesh, a source of irradiation, an electrically controller pressurised cannister which may include an electrically operated release valve, and so on.

Hence, in some embodiments the at least one aerosol generator 103 may be configured to generate an aerosol from the aerosol-generating material without heating, for example by using one or more of the following: vibration, pressure, or electrostatic energy. Examples of non-heating aerosol generators include an ultrasonic vaporiser, and a surface acoustic wave vaporiser. In embodiments in which the aerosol generator 103 is configured to generate the aerosol by heating the aerosol-generating material, the aerosol generator 103 may comprise any one of the following: an induction heater, an electromagnetic (EM) radiation heater (e.g. a laser heater, a non-laser optical heater, an infra-red heater, a radio-frequency heater, or a microwave frequency heater), a plasma heater, a microfluidic heater, a convection heater, a conduction heater, an electro-resistive heater (e.g. a graphene heater or ceramic heater), a halogen heater, a dielectric heater.

In embodiments in which the non-combustible aerosol provision device 100 is a so-called vaping device, the non-combustible aerosol provision device 100 may form part of an aerosol provision system comprising a modular assembly, often having two main functional parts, namely the aerosol provision device 100 and an article 110. In such embodiments the article 110 may comprise the consumable aerosol-generating material 111 and the aerosol generator 103 (e.g. a resistive or inductive heating element), while the aerosol provision device 100 part may comprise longer-life items, such as the rechargeable power source 101, circuitry 102, and other components such as user interface features. The aerosol provision device 100 may also be referred to as a reusable part or battery section, and the article 110 may also be referred to as a consumable, disposable/replaceable part, cartridge or cartomiser.

In both tobacco heating systems and vaping systems, the aerosol provision device 100 and article 110 may be mechanically coupled together at an interface for use, for example using a screw thread, bayonet, latched or friction fit fixing. When the aerosol-generating material in an article 110 has been exhausted, or the user wishes to switch to a different article having a different aerosol-generating material (e.g. a different composition, such as a different flavour), the article 110 may be removed from the aerosol provision device 100 and a replacement article may be attached to the device 100 in its place. Alternatively, in some embodiments an article 110 is configured such that, after the aerosol-generating material 111 in the article 110 has been exhausted, the article 110 can be refilled with more aerosol-generating material 111 (e.g. more tobacco in the case of a tobacco heating system, or more liquid in the case of a vaping systems), thereby allowing the article 110 to be reused. In some such embodiments, the user is able to refill the article 110 using a separate reservoir of aerosol-generating material 111. The aerosol-generating material used to refill the article may be the same or different to the previous aerosol-generating material in the article, thereby allowing the user to change to a different aerosol-generating material 111 without purchasing a new article 110.

Referring now to Fig. 2, a non-combustible aerosol provision device is illustrated according to another example embodiment. The aerosol provision device 200 of Fig. 2 differs from the device 100 of Fig. 1 in that whereas the device 100 of Fig. 1 comprises a single power source 101, the device 200 of Fig. 2 comprises a first power source 201a and a second power source 201b. The first power source 201a and the second power source 201b are each configured to supply power to the aerosol generator for generating the aerosol from the aerosol-generating material. Although two example embodiments are illustrated in Figs. 1 and 2 that respectively comprise one power source 101 and two power sources 201a, 201b, in other embodiments an aerosol provision device may comprise any number of power sources (e.g. more than two power sources).

Like the aerosol provision device 100 of Fig. 1, the aerosol provision device 200 of Fig. 2 comprises circuitry 202, at least one aerosol generator 203, a housing 204 and a charging interface 205, and is configured to receive a consumable 210 comprising aerosol-generating material 211. For the sake of brevity, a detailed explanation will not be repeated in relation to similar aspects that are common to the aerosol provision devices 100, 200 of Figs. 1 and 2. As with the aerosol provision device 100 of Fig. 1, in the aerosol provision device 200 of Fig. 2 the aerosol generator 203 is an induction heater comprising an induction coil 203a and a susceptor 203b. However, in other embodiments a different mechanism other than induction heating may be used to generate the aerosol. For example, in some embodiments the aerosol generator 203 may comprise a resistive heater, or non-heating aerosol generation technology may be used.

In embodiments where an aerosol provision device comprises two or more power sources, such as the example embodiment shown in Fig. 2, at least one of the power sources may comprise a supercapacitor. For example, the supercapacitor may be a hybrid supercapacitor, such as a lithium-ion capacitor (LIC). In the present example embodiment, the first power source 201a comprises a supercapacitor. The second power source 201b may comprise any suitable type of power source, including but not limited to a supercapacitor or a battery. In the present example embodiment, the second power source 201b comprises a rechargeable lithium-ion battery.

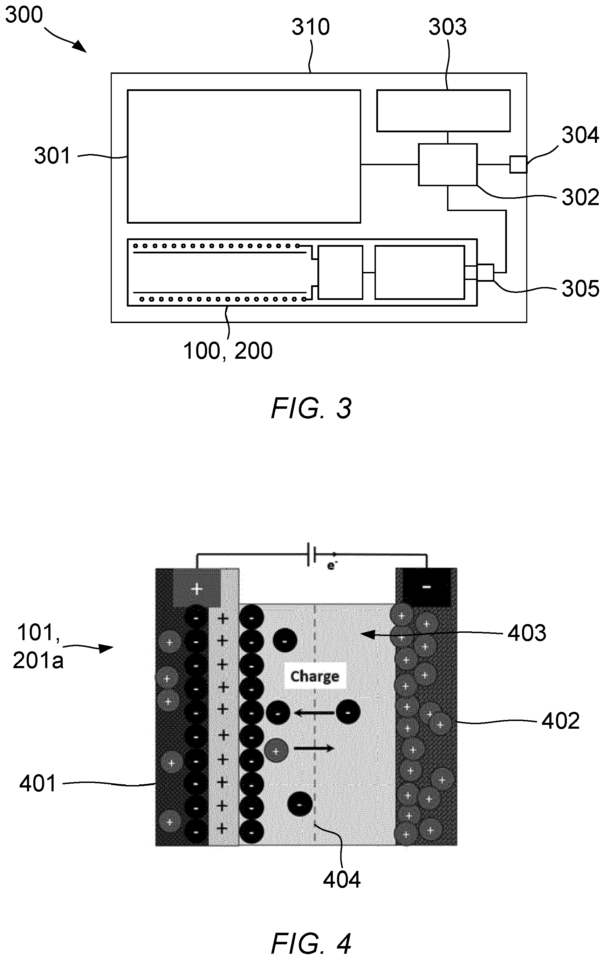

As will be clear from the foregoing description of Figs. 1 and 2, in some embodiments an aerosol provision device such as the devices 100, 200 of Figs. 1 and 2 may comprise at least one rechargeable power source 101, 201a, 201b. A system comprising apparatus 300 for recharging the device 100 of Fig.1 or the device 200 of Fig. 2 will now be described with reference to Fig. 3, according to an example embodiment. For example, the apparatus 300 for recharging the non-combustible aerosol provision device 100 may be referred to as a "charging apparatus", "charger", or a "charging case" or "charging pack", depending on its physical form. In Fig. 3 the apparatus 300 is shown in the form of a charging case or charging pack, comprising a housing 310 having a space in which the non-combustible aerosol provision device 100, 200 may be received during charging. In such embodiments the apparatus 300 may perform a dual function, by acting as a case or pack for protecting the non-combustible aerosol provision device 100, 200 (e.g. while it is being carried by a user) whilst simultaneously charging the at least one rechargeable power source 101, 201a, 201b of the non-combustible aerosol provision device 100, 200. In other embodiments the charging apparatus may have a different form, for example, as a mains adapter or power pack connectable to the charging interface 105, 205 of the non-combustible aerosol provision device 100, 200 via a suitable charging cable or via an induction charging interface.

The charging apparatus 300 of the present example embodiment comprises a charging power source 301, charging control circuitry 302, user interface 303, external power interface 304, and a device interface 305. The user interface 303 may, for example, be used to convey information to a user about a status of the charging apparatus 300 and/or the non-combustible aerosol provision device 100, 200. In some embodiments the user interface 303 may be omitted. The charging control circuitry 302 is configured to control the flow of electrical power from the charging power source 301 and/or from the external power interface 304 to the non-combustible aerosol provision device 100, 200 via the device interface 305, to recharge the at least one power source 101, 201a, 201b of the non-combustible aerosol provision device 100, 200.

The charging power source 301 is configured to store energy that can be used to charge the at least one power source 101, 201a, 201b of the non-combustible aerosol provision device 100, 200. For example, the charging power source 301 may comprise a battery, capacitor, supercapacitor or any other suitable power source capable of storing and providing electrical energy. In some embodiments the charging power source 301 may be omitted, for example when the charging apparatus 300 is embodied as a mains adapter configured to direct power from a mains electrical supply to the non-combustible aerosol provision device 100, 200.

The external power interface 304 is configured to receive power from an external power source, for example the mains electrical supply or another electrical device such as a tablet, laptop or desktop computer, smartphone, and so on. In some embodiments the external power interface 304 may be omitted, for example when the charging apparatus 300 is embodied as a charging case or charging pack. In such embodiments, when the external power interface 304 is omitted, the charging power source 301 may for instance be removable to allow the charging power source 301 to be replenished once depleted, either by replacing the charging power source 301 with another charging power source 301 that is partly or fully charged, or by recharging the charging power source 301 outside of the charging apparatus 300.

Although in the example embodiment shown in Fig. 3, the non-combustible aerosol provision device 100, 200 is recharged using the charging apparatus 300, in other embodiments a non-combustible aerosol provision device 100, 200 may be recharged from any suitable source of electrical energy. For example, the charging interface 105, 205 of the non-combustible aerosol provision device 100, 200 may be a standardised interface such as a Universal Serial Bus-C (USB-C) type connector via which the non-combustible aerosol provision device 100, 200 can be connected to and recharged from any device capable of providing power via a USB-C interface. It should be noted that a USB-C interface is described here purely by way of an illustrative example, and should not be construed as limiting. In other example embodiments, the non-combustible aerosol provision device 100, 200 may comprise a different type of charging interface other than USB-C.

As described above with reference to Figs. 1 and 2, a non-combustible aerosol provision device 100, 200 for providing an aerosol during a puff comprises at least one power source 101, 201a, 201b configured to supply electrical power to at least one aerosol generator 103, 203. In some example embodiments the at least one power source 101, 201a is a supercapacitor, for example a hybrid supercapacitor such as a lithium-ion capacitor (LIC).

In the present disclosure, the term "hybrid supercapacitor" is used to refer to a cell in which one electrode (e.g. an electrode comprising activated carbon) primarily stores energy through an adsorption process via the electric double layer formed on a surface of the electrode, whilst the other electrode (e.g. an electrode comprising graphite pre-doped with lithium) primarily stores energy via intercalation of lithium ions. Conversely, it will be understood that the electrode that primarily stores energy through adsorption via the electric double layer will release energy via a desorption process, whilst the electrode that primarily stores energy via intercalation of lithium ions will release energy via a deintercalation process. The electrode that primarily stores charge as an electric double layer is referred to herein as the cathode, whilst the electrode that primarily stores charge via intercalation of lithium ions is referred to herein as the anode.

Here, the term "primarily stores" means that the mechanism in question is the dominant mechanism by which charge is stored on or in that electrode during operation of the cell, but does not exclude the possibility that a certain amount of charge may also be stored by one or more other mechanisms. For instance, in some example embodiments the cathode (i.e. the electrode that primarily stores energy through adsorption via the electric double layer) may also store and release energy via intercalation/deintercalation of lithium ions. For example, in such embodiments the cathode may comprise a transition metal oxide (TMO) material capable of absorbing and releasing lithium ions via intercalation/deintercalation. In some example embodiments, the cathode may comprise a combination of activated carbon and TMO material.

Depending on the embodiment, various different materials and combinations of materials may be used in the anode and the cathode of the hybrid supercapacitor power source 101, 201a. The cathode may, for example, comprise or consist of one or more of the following materials: activated carbon, heteroatom-doped carbon (e.g. nitrogen, phosphorus doped) or graphene, with dopants including but not limited to lithium cobalt oxide (LCO), lithium manganese oxide (LMO), lithium iron phosphate (LFP), lithium iron manganese phosphate (LMFP), lithium nickel aluminium oxide (NCA), and lithium nickel manganese cobalt oxide (NMC). The anode may, for example, comprise or consist of one or more of the following materials: lithium pre-doped graphitic carbon, hard carbon and or soft carbon, lithium titanium oxide (LTO), or iron oxide (Fe₂O₃).

A hybrid supercapacitor, such as an LIC, also contains a liquid electrolyte and a separator film. The separator film is disposed between the anode and the cathode so as to separate the anode and the cathode. In other words, the separator film prevents the anode from coming into contact with the cathode, which would result in a short-circuit. The separator film permits the flow of electric charges through the electrolyte and through the separator film, such that the electric charges that are transported in the electrolyte may flow from the anode to the cathode and vice versa.

In example embodiments, the liquid electrolyte may contain one or more of the following: a lithium salt, including but not limited to lithium hexafluorophosphate (LiPF₆), lithium hexagluoroarsenate (LiAsF₆), lithium bis (fluorosulfonyl) imide (LiFSI), lithium bis (trifluoromethanesulfonyl) imide (LiTFSI), lithium tetrafluoroborate (LiBF₄), lithium perchlorate (LiClO₄), and lithium bis(oxalato) borate (LiBOB); a carbonate-based organic solvent, including but not limited to ethylene carbonate (EC), propylene carbonate (PC), ethyl methyl carbonate (EMC), diethyl carbonate (DEC), dimethyl carbonate (DMC), propyl acetate (PA), methyl formate (MF), methyl acetate (MA), ethyl acetate (EA), methyl pyrrolidone (MP), tetrahydrofuran (THF), dimethylsulfoxide (DMSO), 1,2-dimenthoxyethane( DME), and dichloromethane (DCM); a nitrile-based organic solvent, such as acetonitrile and/or acrylonitrile; and one or more combinations of additives, including but not limited to vinylene carbonate (VC), vinyl ethylene carbonate (VEC), and fluoroethylene carbonate (FEC).

In example embodiments, the separator film comprises one or more of the following: cellulose or a cellulose-derived material; a monolayer or multilayer polyolefin-based microporous film, including but not limited to polypropylene, polyethylene, polyvinyl chloride and/or poly(tetrafluoroethylene); nonwoven fibres; naturally occurring substances; and ceramic.

In example embodiments, a supercapacitor that is used as a power source in a non-combustible aerosol provision device (e.g. the power source 101 in the device 100 of Fig. 1, or one or both of the power sources 201a, 201b in the device 200 of Fig. 2) may be in the form of a cell having any one of the following cell shapes: a cylindrical cell shape, a pouch cell shape, a rectangular cell shape, and a prismatic cell shape.

Referring now to Fig. 4, an electrode structure of a hybrid supercapacitor power source is schematically illustrated, according to an example embodiment. In the example embodiment of Fig. 4, the hybrid supercapacitor is a LIC. The power sources 101, 201a of the non-combustible aerosol provision devices 100, 200 described above with reference to Figs. 1 and 2 may comprise a hybrid supercapacitor such as the one illustrated in Fig. 4. The LIC hybrid supercapacitor power sources 101, 201a may be configured to be removeable and/or replaceable from the aerosol provision device 100, 200, as has been described above with reference to Fig. 1.

The LIC power source 101, 201a of Fig. 4 comprises a cathode 401, an anode 402, a liquid electrolyte 403, and a separator film 404. The arrows in Fig. 4 illustrate the direction of movement of electric charges (e.g. cations, anions, electrons etc.) during a process of charging the LIC. In the present example embodiment, the cathode 401 comprises activated carbon doped with a TMO, for example NMC, LCO, LFP and/or LTO, whilst the anode 402 comprises lithium pre-doped graphite. During charging, electric charge is stored at the cathode 401 in the form of an electric double layer on the surface of the cathode 401 and in the form of intercalated ions, whilst electric charge is stored at the anode 402 in form of intercalated lithium ions.

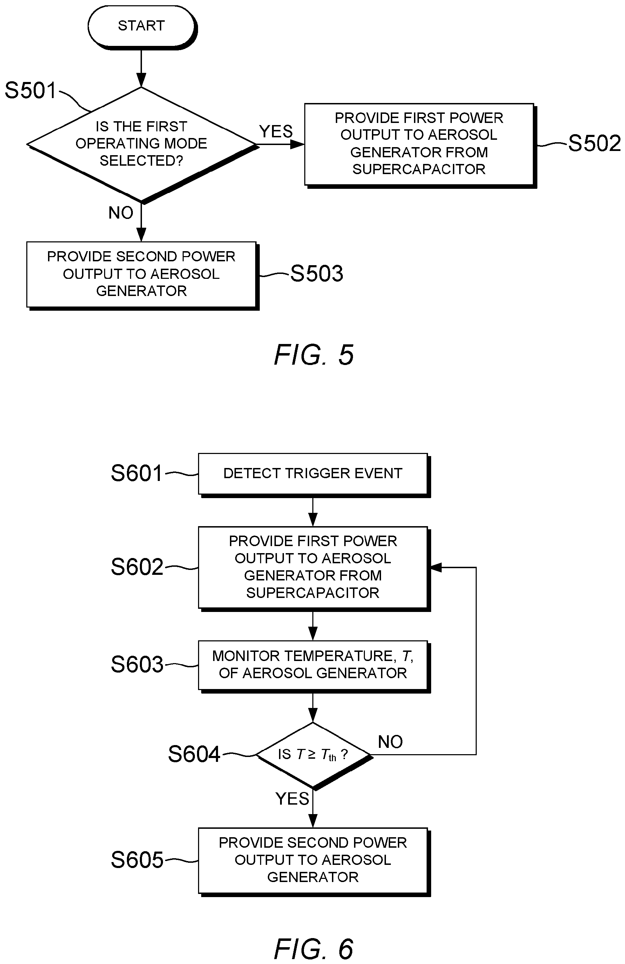

Referring now to Fig. 5, a flowchart showing a method of operating an aerosol provision device is illustrated, according to an example embodiment. The method may be implemented by an aerosol provision device such as the devices 100, 200 described above with reference to Figs. 1 and 2. For example, the steps in the method of Fig. 5 may be performed by the circuitry 102 in the device 100 of Fig. 1, or by the circuitry 202 in the device 200 of Fig. 2. In some embodiments, one or more steps of the method may be performed remotely, for example at a server or at a smartphone communicatively coupled with the aerosol provision device 100, 200. Depending on the embodiment, the steps of the method may be implemented in software and/or in hardware. In a software implementation, a computer program may be provided comprising instructions which, when executed by one or more processors, cause the processor(s) to carry out the method. The computer program may be stored on any suitable form of non-transitory computer-readable storage medium.

First, in step S501 the method checks whether a first operating mode is selected. Here, the first operating mode refers to an operating mode of the aerosol provision device 100, 200. Depending on the implementation, an operating mode (such as the first operating mode) of the aerosol provision device 100, 200 may be selected via user input, or may be selected automatically. For example, in some embodiments a user may select one of a plurality of operating modes, including the first operating mode, via any suitable form of user interface (e.g. a graphical user interface of an application running on a smartphone or other computer communicatively coupled to the device 100, 200, or via a physical user interface mechanism included in the aerosol provision device 100, 200 such as a button, switch, touchscreen and so on).

Alternatively, or in addition to manual selection, in some embodiments the first operating mode may be selected automatically. For instance, in some example embodiments the operating mode may be selected automatically based on certain criteria, including but not limited to: the time of day; day of the week; state of charge of the power source(s) 101, 201a, 201b; a remaining amount of aerosol-generating material 111, 211 that is left in the device 100, 200 or consumable 110, 210; a composition of the aerosol-generating material 111, 211 (e.g. different consumables 110, 210 may contain aerosol-generating material 111, 211 with different nicotine concentrations, and/or with different active ingredients); a type of consumable 110, 210; an ambient temperature; a current temperature of the aerosol-generating material 111, 211 (e.g. an estimated or measured temperature); a current temperature of the consumable 110, 210 (e.g. an estimated or measured temperature); a current temperature of the device 100, 200 (e.g. an estimated or measured temperature); an identity of the current user of the aerosol provision device 100, 200; and a usage history of the aerosol provision device 100, 200. In some embodiments, the condition that is used to automatically select the first operating mode may itself be selected by a user in advance of the current puff/session, for example by selecting from a list of available criteria when configuring the aerosol provision device 100, 200.

If it is determined in step S501 that the first operating mode has been selected, then the method proceeds to step S502 and provides a first power output to the aerosol generator 103, 203 for generating an aerosol from the aerosol-generating material 111, 211. Specifically, in step S502 the first power output is provided from a supercapacitor, such as the power source 101 of the aerosol generating device 100 of Fig. 1 or the first power source 201a of the aerosol generating device 200 of Fig. 2. Here, the terms "first power output" and "second power output" may refer to an average power or to a peak power, depending on the circumstances.

In some embodiments the current to the heater may be modulated using a power modulation technique, for example by rapidly switching the current on/off repeatedly (e.g. using pulse width modulation, PWM, or pulse frequency modulation, PFM, or similar such methods) to provide pulses of current to the aerosol generator 103, 203 during a puff, or during a heating session spanning a number of puffs (e.g. in a heat-not-burn system, such as a tobacco heating system or non-tobacco heating system).

In such embodiments, the first power output and the second power output may refer to the average power that is supplied to the aerosol generator 103, 203 across a plurality of pulses, as opposed to referring to the peak power (i.e. the maximum power delivered during a single pulse).

In other embodiments the first power output and the second power output may refer to the peak power, for example when the first power output is supplied to a first aerosol generator and the second power output is supplied to a second aerosol generator. In such embodiments, if the first and second aerosol generators are different (e.g. have different electrical resistances), then the peak power delivered to each aerosol generator may be different, even if the first and second power outputs are provided by the same power source (e.g. a supercapacitor power source 101, 201a).

In some embodiments, the peak power and/or the average power that is supplied to the aerosol generator 103, 203 during a puff or during a heating session may vary over the course of the puff/session. For example, the peak power may decrease due to the charge level (and hence the output voltage) of the power source 101, 201a, 201b varying over time, and/or the average power may vary as a result of a duty cycle being varied over time (e.g. when some form of power modulation is used, such as PWM or PFM). In such embodiments, the terms "first power output" and "second power output" may refer to the power that is supplied to the aerosol generator 103, 203 at equivalent points in time during comparable puffs/sessions when operating in either the first operating mode or the second operating mode, respectively.

On the other hand, if it is determined in step S501 that the first operating mode is not selected, then the method proceeds to step S503 and provides a second power output to the aerosol generator 103, 203 for generating an aerosol from the aerosol-generating material 111, 211. In the scenario in which the second power output is provided in step S503, the aerosol provision device 100, 200 may be considered to be operating in a second operating mode, as distinct from the first operating mode in which the first power output is provided in step S502.

When the aerosol provision device 200 comprises a second power source 201b in addition to the supercapacitor 201a, for example as in the aerosol provision device 200 of Fig. 2, the second power output may be provided from the second power source 201b. Depending on the implementation, the second power output may be provided solely from the second power source 201b in the second mode of operation, or the second power output may be provided jointly from both the first and second power sources 201a, 201b. Similarly, in the first mode of operation the first power output may be provided solely from the first power source 201a, or the first power output may be provided jointly from both the first and second power sources 201a, 201b.

In embodiments in which the aerosol provision device comprises two or more power sources including a supercapacitor, as in the device 200 of Fig. 2, the supercapacitor power source (the first power source 201a in Fig. 2) may be configured to be removable (e.g. detachable) from the aerosol provision device 200 when not required, in which case the device 200 can be operated in the second operating mode with the second power source 201b as the sole power source. For example, the circuitry 202 may be configured to automatically operate the device 200 in the first power mode whenever the first power source 201a (i.e. the supercapacitor) is connected to the device 200, and may be configured to automatically operate the device 200 in the second power mode whenever the first power source 201a is not connected to the device 200.

Although the present example embodiment involves a selection between two operating modes, in other embodiments any number of operating modes may be provided, each of which may be associated with a different power output. For example, in some embodiments an aerosol provision device 100, 200 may be operable in any of a first, second and third operating mode, in which the aerosol generator 103, 203 is provided with a first, second or third power output, respectively.

The first power output is higher than the second power output. In other words, in the first operating mode greater electrical power is supplied to the aerosol generator 103, 203, relative to the electrical power that is supplied to the aerosol generator 103, 203 in the second operating mode. Hence, the first operating mode may also be referred to as a "higher-power mode" or a "high-power mode", and by comparison the second operating mode may be referred to as a "lower-power mode" or a "low-power mode". Since supercapacitors are generally capable of being discharged more quickly (in other words, capable of supplying energy at a higher power) compared to other types of power source, such as conventional batteries, the first power output can be set to a higher power level compared to hypothetical alternative implementations in which a different type of power source is used in the first operating mode (e.g. a lithium-ion battery). Similarly, in embodiments in which a different power source is used in the second operating mode (e.g. the rechargeable lithium-ion battery 201b of Fig. 2), the provision of a supercapacitor power source 201a can allow more power to be delivered to the aerosol generator 203 in the first operating mode. For example, a supercapacitor with a capacity of 200 mA can be capable of supplying a peak current of around 5 Amperes (A) to the aerosol generator. By comparison, a typical lithium-ion battery (LIB) of similar capacity may only be capable of providing a peak current of around 1.6 A.

The aerosol generator 103, 203 may be configured to generate aerosol at a rate that is dependent on a level of power received by the aerosol generator 103, 203. Since the first power output is higher than the second power output, in such embodiments the rate at which aerosol is generated in the first mode of operation is therefore higher than the rate at which aerosol is generated in the second mode of operation.

In some embodiments the second operating mode may be the default operating mode of the aerosol provision device 100, 200, meaning that the aerosol provision device 100, 200 automatically operates in the second operating mode unless the first operating mode is selected (e.g. in response to user input selecting the first operating mode, or in response to a certain condition being fulfilled). In such embodiments, the second operating mode may be considered to be the normal operating mode, and the first operating mode may be considered to be a special (e.g. temporary) operating mode. Since the first operating mode is a higher-power mode, in such embodiments the first operating mode may be referred to as a "boost" mode. In other embodiments the first operating mode may be the default operating mode of the aerosol provision device 100, 200, meaning that the aerosol provision device 100, 200 automatically operates in the first operating mode unless the second operating mode is selected (e.g. in response to user input selecting the second operating mode, or in response to a certain condition being fulfilled). In such embodiments, the first operating mode may be considered to be the normal operating mode, and the second operating mode may be considered to be a special (e.g. temporary) operating mode. Since the second operating mode is a lower-power mode, in such embodiments the second operating mode may be referred to as a "power-saving" mode.

Since the aerosol generator 103, 203 is provided with a different amount of electrical power in the first operating mode versus in the second operating mode, the provision of aerosol can differ between the first and second operating modes. In the first operating mode, more electrical energy is supplied to the aerosol generator 103, 203 per unit time compared to the second operating mode, since the first power output is higher than the second power output. For example, in embodiments in which the aerosol generator 103, 203 is configured to generate the aerosol by heating the aerosol-generating material 111, 211, when the first power output is supplied to the aerosol generator 103, 203 in the first operating mode the aerosol generator 103, 203 may heat the aerosol-generating material 111, 211 to a higher temperature, compared to a temperature to which the aerosol-generating material 111, 211 is heated when the second power output is supplied to the aerosol generator 103, 302 in the second operating mode.

Consequently, the characteristics of the aerosol that is generated in the first operating mode can differ from the characteristics of the aerosol that is generated in the second operating mode. For example, in the first operating mode, certain constituents of the aerosol-generating material 111, 211 may be volatilised which are not volatilised in the second operating mode, due to the aerosol-generating material 111, 211 being heated to a higher temperature in the first operating mode. This may cause a change in the characteristics of the aerosol, such as its flavour or texture. For example, in the first operating mode, a greater quantity of at least one component of the aerosol-generating material may be volatilised per unit time. Therefore, in the first operating mode the user may be provided with a stronger aerosol per puff.

Furthermore, such effects are not restricted to embodiments in which heating aerosol generation technologies are used. For example, in some embodiments non-heating aerosol generation technologies may be used, in which aerosol is generated by different physical mechanisms such as vibration, pressure, and/or electrostatic energy. For instance, supplying a higher power output to the aerosol generator in the first operating mode may result in a non-heating aerosol generator producing a higher power, higher pressure (or greater negative pressure), and/or a stronger electrostatic field compared to the second operating mode, thereby modifying one or more characteristics of the resulting aerosol.

Accordingly, by using a supercapacitor to support a higher-power mode (i.e. the first operating mode), the user can be provided with aerosol with differing characteristics using the same device 100, 200 and the same aerosol-generating material 111, 211.

Referring now to Fig. 6, a flowchart showing a method of operating an aerosol provision device is illustrated, according to an example embodiment. As with the method of Fig. 5, the method of Fig. 6 may be implemented by an aerosol provision device such as the devices 100, 200 described above with reference to Figs. 1 and 2. For example, the steps in the method of Fig. 6 may be performed by the circuitry 102 in the device 100 of Fig. 1, or by the circuitry 202 in the device 200 of Fig. 2. In some embodiments, one or more steps of the method may be performed remotely, for example at a server or at a smartphone communicatively coupled with the aerosol provision device 100, 200. Depending on the embodiment, the steps of the method may be implemented in software and/or in hardware. In a software implementation, a computer program may be provided comprising instructions which, when executed by one or more processors, cause the processor(s) to carry out the method. The computer program may be stored on any suitable form of non-transitory computer-readable storage medium.

The method illustrated in Fig. 6 may be used to dynamically vary the amount of power provided to the aerosol generator 103, 203 during a single puff. For example, such a method may be implemented in devices where the aerosol generator is only supplied with power during a puff, and is not powered (or is supplied with substantially less power) at times when the user is not puffing on the device. This may be the case in devices which include a puff sensor, such as a microphone or pressure sensor arranged so as to detect a change in pressure or airflow through the device when the user is puffing on the device. A signal from the puff sensor can be used to activate and/or deactivate the supply of power to the aerosol generator. Such devices may commonly be referred to as "puff-activated" devices. In other embodiments, instead of using a puff sensor the supply of power may be controlled via a different mechanism, for example by means of a user interface (e.g. switch, button, touchpad etc.) that can be activated by the user when they wish to take a puff on the device.

First, in step S601 the method begins by detecting a trigger event. Here, the term "trigger event" may refer to any event that acts as a trigger to start the supply of electrical power to the aerosol generator 103, 203. For example, in a puff-activated device the trigger event could constitute the signal from a puff sensor reaching a threshold value that is deemed to be indicative of a puff on the device 100, 200. As another example, in a button-activated device the trigger event could be a control signal indicative of the button being pressed by the user, to trigger the generation of aerosol on-demand.

In response to the trigger event being detected, the method proceeds to step S602 and provides the first power output from the supercapacitor 101, 201a to the aerosol generator 103, 203. Then, in step S603 the temperature T of the aerosol generator 103, 203 is monitored while the first power output is being supplied, and in step S604 it is checked whether the temperature T of the aerosol generator 103, 203 is greater than or equal to a threshold temperature, *T*ₜₕ. In response to the temperature T of the aerosol generator 103, 203 being less than the threshold temperature, *T*ₜₕ, the method returns to step S602 and continues to supply the first power output.

When it is detected in step S604 that the temperature *T* of the aerosol generator 103, 203 is greater than or equal to the threshold temperature, *T*ₜₕ, the method proceeds to step S605 and begins supplying the second power output to the aerosol generator 103, 203. In other words, when the temperature T of the aerosol generator 103, 203 is greater than or equal to the threshold temperature, *T*ₜₕ, the device 100, 200 ceases operating in the first operating mode and begins operating in the second operating mode. Consequently, by implementing a method such as the one shown in Fig. 6, the circuitry 102, 202 can be configured to provide the first power output to the aerosol generator 103, 203 in the first mode of operation during a first time period within a puff on the aerosol provision device 100, 200, and can be configured to provide the second power output to the aerosol generator 103, 203 in the second mode of operation during a second time period within said puff. Here, the first time period precedes the second time period, and the first time period ends when the temperature *T* of the aerosol generator 103, 203 reaches (or exceeds) the threshold temperature, *T*ₜₕ.

By switching from the first operating mode to the second operating mode in dependence on a temperature of the aerosol generator, in this way the amount of power that is supplied to the aerosol generator 103, 203 can be varied dynamically during a puff. This in turn can provide greater control over the variation in aerosol properties during a puff, for example, by reducing a temperature of the aerosol generator 103, 203 towards the end of a puff and/or preventing the temperature of the aerosol-generator 103, 203 from exceeding a desired operating temperature during the puff.

Although in the present example embodiment the method involves monitoring a temperature of the aerosol generator 103, 203 and comparing this to a threshold temperature, an analogous approach may be used in devices that use non-heating aerosol generation technologies. In such embodiments, a different property of the aerosol generator may be monitored other than temperature. For instance, in a device that is configured to generate an aerosol using vibration (e.g. where the aerosol generator comprises a vibrating mesh), the extent of movement and/or the rate of movement of the aerosol generator while vibrating may be monitored and compared to a corresponding threshold in step S604. Since the extent and/or rate of vibration may affect the way in which aerosol is generated, such a control method can allow the generation of aerosol to be dynamically controlled during a puff.

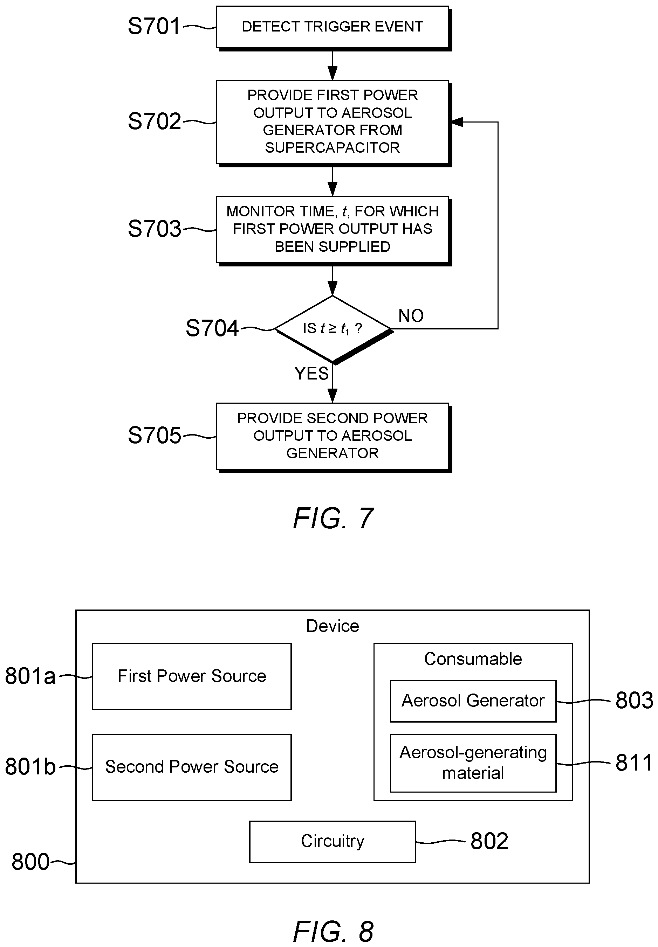

Referring now to Fig. 7, a flowchart showing a method of operating an aerosol provision device is illustrated, according to an example embodiment. As with the methods of Figs. 5 and 6, the method of Fig. 7 may be implemented by an aerosol provision device such as the devices 100, 200 described above with reference to Figs. 1 and 2. For example, the steps in the method of Fig. 7 may be performed by the circuitry 102 in the device 100 of Fig. 1, or by the circuitry 202 in the device 200 of Fig. 2. In some embodiments, one or more steps of the method may be performed remotely, for example at a server or at a smartphone communicatively coupled with the aerosol provision device 100, 200. Depending on the embodiment, the steps of the method may be implemented in software and/or in hardware. In a software implementation, a computer program may be provided comprising instructions which, when executed by one or more processors, cause the processor(s) to carry out the method. The computer program may be stored on any suitable form of non-transitory computer-readable storage medium.

In Fig. 7, steps S701, S702 and S705 can be implemented in a similar manner to steps S601, S602 and S605 of Fig. 6, respectively, and a detailed description of such similar aspects will not be repeated here. Steps S703 and S704 in Fig. 7 are analogous to steps S603 and S604 of Fig. 6, but differ in that the variable that is monitored in step S703 in the present example embodiment is the time, t, that has elapsed since the start of supplying the first power output to the aerosol generator 103, 203 in step S702. In step S704, when the time *t* reaches a predetermined time period, *t*₁, the method proceeds to step S705 and begins supplying the second power output to the aerosol generator 103, 203.

As with the method of Fig. 6, the method of the present example embodiment in Fig. 7 can therefore be used to dynamically vary the generation of aerosol during a puff. For example, a length of the time period *t*₁ can be set so as to provide a relatively short burst of high power at the start of a puff to rapidly bring the aerosol generator 103, 203 up to temperature (e.g. in devices where the aerosol generator 103, 203 is configured to heat the aerosol-generating material 111, 211), helping to reduce the time taken to begin generating aerosol at the beginning of a puff. Reducing the power to the second power output later in the puff can help to conserve power without necessarily having a significant impact on aerosol generation.

Example embodiments have therefore been described in which an aerosol provision device comprises least one power source comprising at least one supercapacitor configured to supply electrical power to at least one aerosol generator for generating the aerosol from aerosol-generating material. An example of such an aerosol provision device is schematically illustrated in Fig. 8. The device 800 comprises at least one supercapacitor power source 801, and circuitry 802 (e.g. similar to the circuitry 102, 202 described above with reference to Figs. 1 and 2). The circuitry 802 can control the flow of power from the supercapacitor power source to an aerosol generator 803, for generating an aerosol from an aerosol-generating material 811. Depending on the embodiment, the aerosol generator 803 and/or the aerosol-generating material 811 may be included in the aerosol provision device 800, or may be included in a physically separate consumable 810 that is removeably engageable with the device 800, so that the consumable can be removed and replaced as and when necessary (e.g. when the aerosol-generating material 811 has been used up, or if the aerosol generator 803 is no longer operable).

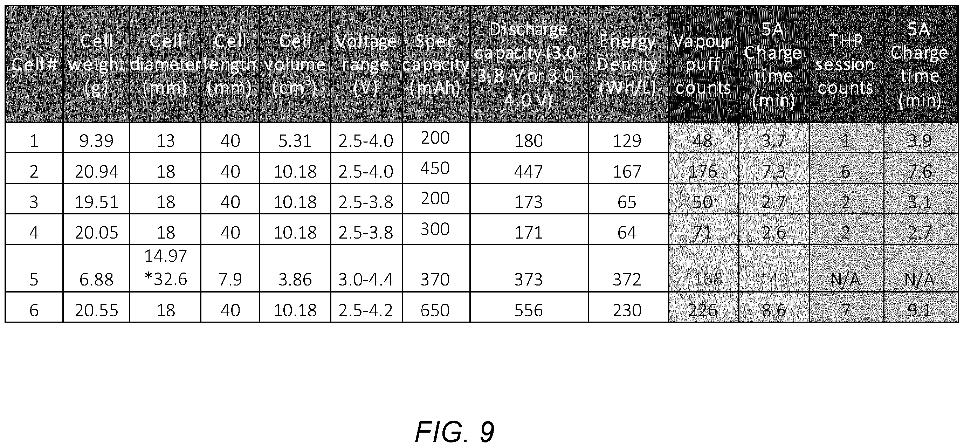

Figure 9 is a table illustrating cell properties and test results for six different types of power sources (cells), including LIC hybrid supercapacitor cells according to example embodiments. The table lists the following properties for each cell:
- Cell weight in grams (g);
- Cell diameter in millimetres (mm) - note that a single diameter is stated for cells 1-4 and 6 since these are circular in cross-section, whilst two values are stated for cell 5 since this has a rectangular cross-section;
- Cell length in mm;
- Cell volume in cubic centimetres, cm³;
- Operating voltage range of the cell, in volts (V);
- The manufacturer's specified capacity of the cell, in milliampere-hours (mAh); and
- The energy density of the cell, measured in Watt hours per litre (Wh/L).

In addition, the table in Fig. 9 lists the following test results for each cell:
- The discharge capacity of the cell, which is the total energy discharged from the cell (measured in mAh) during a discharge operation in which the cell voltage drops from a first voltage to a second voltage, the second voltage being lower than the first voltage;
- The vapour puff counts, which is the total number of puffs that can be achieved based on the discharge capacity and a simulated power consumption profile for an example vaping device;
- The 5 Ampere (A) charge time for the example vaping device comprising the cell, measured in minutes (min), which is the time taken to charge the cell from a discharged state to a charged state (in this case, charging from a discharged state in which the output voltage of the cell is too low for a controller in the device to operate up to a fully charged state, i.e. 100% state of charge, SOC);
- The THP session counts, which is the total number of sessions that can be achieved based on the discharge capacity and a simulated power consumption profile for an example THP (tobacco heated product) device; and
- The 5A charge time for the example THP device comprising the cell, measured in minutes (min) , which is the time taken to charge the cell from a discharged state to a charged state (in this case, charging from a discharged state in which the output voltage of the cell is too low for a controller in the device to operate up to a fully charged state, i.e. 100% state of charge, SOC).

In each of the tests set out above, for which the results are given in Fig. 9, the cell in question was either charged or discharged between a certain discharged state and a certain charged state. Here, the term "discharged state" refers to the state of charge of the cell at the start of the test (for tests involving charging) or at the end of the test (for tests involving discharging). Conversely, the term "charged state" refers to the state of charge of the cell at the end of the test (for tests involving charging) or at the start of the test (for tests involving discharging). The charged state in all of the tests for which results are given in Fig. 9 was a fully charged state, meaning a state of charge in which the cell is considered to no longer capable of storing any further electrical charge (which may also be referred to as a 100% SOC). For example, the cell may be considered to be in the fully charged state once the level of current flowing to the cell (in the case of charging) falls below a minimum threshold, e.g. 0.5A. The discharged state in all of the tests for which results are given in Fig. 9 was a state of charge in which the output voltage of the cell is below (e.g. marginally below) a minimum operating voltage threshold *Vₜ* required by a controller (e.g. a master control unit, MCU) in the device. In other words, the discharged state in all tests was defined as being a state of charge in which output voltage of the cell had fallen to a level at which the controller in the device was no longer able to operate, meaning that the device was rendered inoperable with the cell in the discharged state.

In the results shown in Fig. 9, the measured charge time at a charging current of 5A for each cell is longer when used in the example THP device, compared to the measured charge time at the same charging current (5A) for the same cell in the example vaping device. This is because the example THP device and the example vaping device used in these tests comprised different controllers having different minimum operating voltages. The controller in the example THP device has a minimum operating voltage of 3.0 V, whereas the controller in the example vaping device has a minimum operating voltage of 3.3 V. Hence, the starting point in the 5A charge time tests for the example THP device was a discharged state in which the output voltage of the cell was at (or marginally below) 3.0 V, whereas the starting point in the 5A charge time tests for the example THP device was a discharged state in which the output voltage of the cell was at (or marginally below) 3.3 V. In both cases, the end point of the 5A charge time tests was when the cell reaches its maximum output voltage (i.e. at a 100% state of charge). For this reason, the measured 5A charge times are longer for the example THP device compared to the measured 5A charge times for the example vaping device.

Cells #1 to #4 in the table shown in Fig. 9 comprise LIC power sources according to example embodiments. Specifically, cells #1, #2, #3 and #4 are LIC cells comprising an activated carbon cathode and a lithium pre-doped graphite anode. Cells #3 and #4 comprise cathodes having a lower level of TMO dopants compared to cells #1 and #2. Cell #5 is a comparative example of a commercially available vaping device comprising a conventional lithium-ion battery, and cell #6 is a comparative example of a commercially available vaping device comprising an LIC power source.

Cell #1 is an LIC cell manufactured by CDA (RTM), identified by the product code LIB1340Q4R0507. Cell #2 is an LIC cell manufactured by CDA, identified by the product code LIB1840Q4R0118. Cell #3 is an LIC cell manufactured by CDA, identified by the product code LIC1840Q3R8507. Cell #4 is an LIC cell manufactured by CDA, identified by the product code LIC1840Q3R8757. Based on the test results presented herein, the present inventors have recognised that such cells are particularly suited for use as the power source in an aerosol provision system, as will be explained below.

The values given for the discharge capacities in Fig. 9 were obtained at a C-rate of 0.2C and at a temperature of 25 °C. C-rates are widely used to allow comparisons between cells of different capacities, and a C-rate of 0.2C means that the cell would be fully discharged after 5 hours (1/0.2) if power was drawn from the cell at a continuous rate of 0.2C, starting with the cell fully-charged. For cells #1 and #2, both of which have a specified operating voltage range of 2.5-4.0 V, as stated in the column headed "Voltage range" in Fig. 9, the discharge capacity was measured over the voltage range 3.0-4.0 V. For cells #3 and #4, both of which have a specified operating voltage range of 2.5-3.8 V, as stated in the column headed "Voltage range" in Fig. 9, the discharge capacity was measured over the voltage range 3.0-3.8 V so as not to exceed the maximum operating voltage of the cell.

The values given for the vapour puff counts and THP session counts in Fig. 9 were obtained based on simulated power consumption profiles for an example vaping device. To enable a like-for-like comparison between different cells, the simulated power consumption profiles assume that the device is operated solely in the second operating mode (i.e. the lower-power operating mode out of the first and second operating modes). Hence, in the simulated power consumption profiles, the second power output is supplied to the aerosol generator. In a real-world scenario, if a user selected the first operating mode (i.e. the higher-power operating mode) for some or all of the puffs, the first power source 101, 201a would be depleted more quickly than in the results shown in Fig. 9.

The power consumption profile was determined by repeatedly subjecting the device to puffs of 3-second duration with a 30-second pause between puffs, under the control of a smoke engine to ensure repeatability. During each puff, the second power output was supplied to the aerosol generator by the first power source 101, 201a using pulse width modulation (PWM), with a 50% duty cycle and a switching frequency of 50 Hertz (Hz). Under these conditions, the example vaping device consumes approximately 6.5 milliWatt hours (mWh), or 23.4 Joules (J), per puff. The power consumption profile was then translated to a battery test script and applied to each of the cells under test (cells #1 to #6) using a Maccor battery tester, starting with the cell in the fully-charged state. The number of simulated puffs was then counted until the cell was fully depleted, to determine the total number of puffs that can be supplied by the cell when fully-charged (i.e. the "vapour puff counts" value). In this context, "fully depleted" means that the cell was discharged to the "discharged state" as defined above. Hence, it should be understood that in this context, when the cell is said to be "fully depleted" in practice the cell may still hold a certain amount of charge.

A similar approach was used to obtain the values for the THP session counts in Fig. 9, which were obtained based on simulated power consumption profiles for an example tobacco heating system. In this case, the aerosol generator in the tobacco heating system is activated for a longer period of time (referred to as a "session") in comparison to the aerosol generator in the vaping device, which is activated at the start of each puff and deactivated at the end of each puff. A user will typically take several puffs on a tobacco heating system during the session. In the present example, the power consumption profile for the example tobacco heating system was obtained based on the second power output being provided for an average session duration of approximately 4 minutes and 45 seconds (4.75 min), during which the tobacco heating system consumes approximately 220 mWh, or 792 J, of power from the cell. The power consumption profile was then translated to a battery test script and applied to each of the cells under test (cells #1 to #6) using a Maccor battery tester, starting with the cell in the fully-charged state. The number of simulated THP sessions was then counted until the cell was fully depleted, to determine the total number of sessions that can be supplied by the cell when fully-charged (i.e. the "THP session counts" value). When determining the THP session counts, if the cell became depleted part-way through a simulated session (i.e. giving a non-integer value of the THP session count), then the number of sessions is rounded down to the nearest integer so as to give the total number of complete sessions that can be provided by a fully-charged cell.

As noted above, in some embodiments the supercapacitor may be the only power source in an aerosol provision device (as in the device 100 of Fig. 1). Historically, the trend in aerosol provision systems (e.g. vaping devices and tobacco heating systems) has been to increase the capacity of the device's power source to allow the device to be used for a longer period of time in between charges. At the same time, there has also been a desire to shorten the charging time for the device's power source, so that the device can be recharged more quickly once the power source has been depleted. These represent conflicting technical requirements, particularly in situations where other constraints mean that it is not possible to supply a larger-capacity cell with sufficient current to charge the cell at the same C-rate as a smaller-capacity cell of the same type. The example of cell #6 in Fig. 9, which is from a commercially available LIC-powered vaping device, follows this trend by using a relatively high-capacity LIC power source (650 mAh capacity).

However, the present inventors have recognised that since supercapacitors can be charged much more rapidly than conventional batteries (e.g. lithium-ion batteries), when using a supercapacitor as a power source in an aerosol provision system the total capacity becomes less significant from the user's perspective. This is because when the cell is depleted, the much faster charge time means that the device can be quickly recharged and be ready to use once more, with minimal inconvenience for the user. In other words, the act of recharging the device is much less of an inconvenience for a user when a supercapacitor power source is used, compared to devices comprising conventional power sources.

Hence, in embodiments in which a supercapacitor is used as the sole power source for an aerosol generator in an aerosol provision device, the present inventors have recognised that this presents an opportunity to reduce the capacity (and hence the vapour puff count or THP session count) without causing any significant inconvenience for the user, since the charge time for a lower-capacity supercapacitor (e.g. cells #1, #3 and #4 in Fig. 9) can be much lower than the charge time for a conventional battery (e.g. cell #5), or even for a larger-capacity supercapacitor (e.g. cell #6). In other words, rather than following the historical trend of increasing the cell's capacity compared to previous generations of devices, using a supercapacitor as the power source in an aerosol provision system offers an opportunity to reduce the charging time yet further (i.e. the time taken to fully charge the cell, from 0% to 100%), by prioritising a reduction in charging time versus prioritising the number of puffs/sessions between charges. Furthermore, any minor inconvenience due to having to recharge the supercapacitor more frequently may be yet further diminished in embodiments where the supercapacitor is used in combination with another power source (e.g. a lithium-ion battery), since it may be possible to continue using the device even after the supercapacitor has been depleted (i.e. if the other power source still holds sufficient charge for the device to operate).

Hence, in some example embodiments, an aerosol provision system may comprise a power source comprising at least one supercapacitor (e.g. a hybrid supercapacitor, such as an LIC) having a charging time of less than or equal to 12 minutes. Here, the term "charging time" should be understood as meaning the time taken to fully charge the cell, from 0% to 100%. In such embodiments, the reduction in charging time compared to prior art devices is achieved in part by using a supercapacitor as opposed to e.g. a conventional lithium-ion battery, and in part by selecting a supercapacitor cell of lower capacity to reduce the charging time still further. Hence, in such embodiments, as well as having a charging time of less than or equal to 12 minutes the supercapacitor may also have a capacity such that in the fully-charged state (i.e. when 100% charged) the supercapacitor is configured to store sufficient electrical charge to supply electrical power to the at least one aerosol generator for no more than 80 puffs.

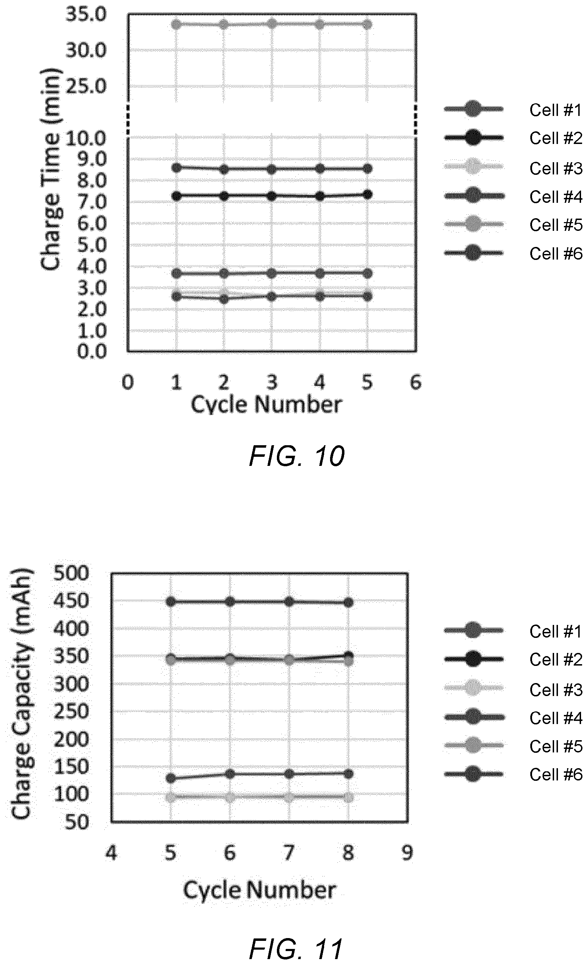

This advantage is demonstrated in Fig. 10, which plots the 5A charge time in minutes against the cycle number (number of charge/discharge cycles) for cells #1 to #6. The charge time can be understood as the time taken for a cell to be charged from one state to another state. As described above with reference to Fig. 9, the starting point of the cell when measuring the charge time may be referred to as a "discharged state", and the end point (i.e. after charging has been completed) may be referred to as a "charged state". It will be appreciated that the discharged state and charged state may be defined differently depending on the test criteria used to measure a charging time. In the present example embodiments, the charge time was measured when starting with the cell in a state of charge (SOC) in which its output voltage was at (or marginally below) the minimum voltage required by a controller in the device to operate. This starting point may be referred to as the "discharged state" or even the "fully discharged state", although in the latter case it should be appreciated that in reality the cell will still hold a finite amount of charge even when the output voltage drops below the minimum operating voltage required by the device's controller. Similarly, the charged state may be understood as being one in which the cell is unable to store any more electrical charge, and may therefore be referred to as a "fully charged state" or 100% SOC.

In the present example embodiments, the 5A charge time for cells #1 to #4 and #6 was measured by charging the cell at a constant current of 5A until the output voltage of the cell reached the corresponding upper limit specified in the "Voltage Range" column in Fig. 9, and then continuing charging at constant voltage (i.e. whilst holding the voltage at the upper limit) until the current reduced to 0.5A. For cell #5, due to limitations with the example vaping device that was used, the charge time was measured by charging the cell at a constant current of 1.11A (equal to a C rate of 3C for cell #5) until the output voltage of the cell reached 4.4V, and then continuing charging at a constant voltage of 4.4V until the current reduced to 0.11A (0.1C rate).

As shown in Fig. 10, cells #1, #3 and #4 all have a significantly shorter charge time than cells #5 and #6, and therefore offer greater convenience for a user by reducing the length of time that the user must wait before the device is fully charged. In particular, each of cells #1, #3 and #4 has a vapour puff count of 80 puffs or less, meaning that when fully charged the cell is configured to store sufficient electrical charge to supply electrical power to the at least one aerosol generator for no more than 80 puffs. Additionally, cells #1, #3 and #4 each have a 5A charge time of less than or equal to 12 minutes. In some example embodiments, the supercapacitor may have a charge time of less than or equal to 10, 9, 8, 7, 6, 5 or 4 minutes (e.g. cells #1, #3 and #4 all have a 5A charge time of 3.7 minutes or less). In some example embodiments, the supercapacitor may have a vapour puff count of 50 puffs or less (e.g. cells #1 and #3 have vapour puff counts of 48 and 50 puffs respectively).

By utilising a lower-capacity supercapacitor in this way, to further reduce the charge time, in some example embodiments an aerosol provision device may therefore comprise a power source comprising at least one supercapacitor (e.g. a hybrid supercapacitor such as an LIC) having a total energy storage capacity of less than or equal to 450 mAh, as is the case for each of cells #1 to #4 in Fig. 5. In some such embodiments, the total energy storage capacity may be between 200 and 300 mAh, as is the case for cells #1, #3 and #4.

Similarly, by utilising a lower-capacity supercapacitor in this way, the volume and/or mass of the cell may be further reduced, enabling a more compact and/or lightweight device. For instance, in some example embodiments an aerosol provision device may comprise a power source comprising at least one supercapacitor (e.g. a hybrid supercapacitor such as an LIC) having a mass less than or equal to 20 grams (e.g. cell #1 has a mass of 9.39 g, whilst cell #3 has a mass of 19.51 g). In some example embodiments an aerosol provision device may comprise a power source comprising at least one supercapacitor (e.g. a hybrid supercapacitor such as an LIC) having a volume less than or equal to 10 cm³, for instance less than or equal to 9, 8, 7, or 6 cm³ (e.g. cell #1 has a volume of 5.31 cm³).

As described above, the charge time of an aerosol provision system can be reduced by using a supercapacitor as the power source for the aerosol generator. In some example embodiments, a supercapacitor cell can be selected based on its discharge capacity or charge capacity, and based on the vapour puff count that can be achieved by that cell in the intended aerosol provision system. For example, in some embodiments an aerosol provision system comprises at least one power source comprising a supercapacitor, wherein the supercapacitor has a discharge capacity between a first output voltage limit and a second output voltage limit of no more than 180 mAh, and in the charged state the supercapacitor is configured to store sufficient electrical charge to supply electrical power to the at least one aerosol generator for no more than 80 puffs.

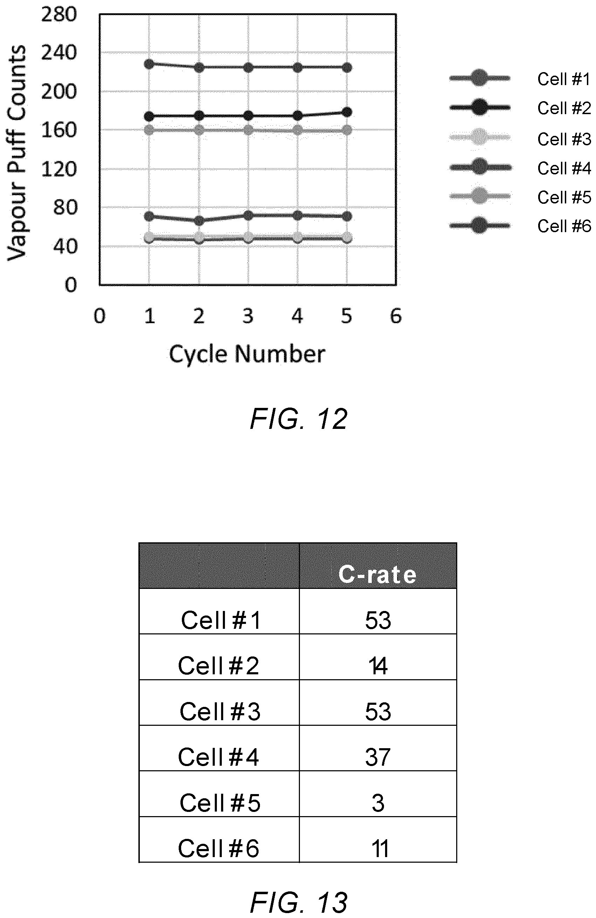

For example, as shown in Fig. 9 cells #1, #3 and #4 all have discharge capacities of less than 180 mAh when measured at a C-rate of 0.2C (equivalent to a current <1A for each of cells #1, #3 and #4). Also, as shown in Fig. 11 cells #1, #3 and #4 all have charge capacities of less than 150 mAh (as measured at a charging current of 5A). At the same time, as shown in Fig. 12, cells #1, #3 and #4 each provide a vapour puff count of no more than 80 puffs when tested under the conditions specified above in relation to Fig. 9 (i.e. puffs of 3-second duration with a 30-second pause between puffs).

In some example embodiments the cell may provide a higher vapour puff count than 80 puffs when tested under these conditions, for example no more than 90, 100, 110, 120, 130, 140, 150, 160, 170, 180, 190 or 200 puffs (e.g. cell #2 provides a vapour puff count of 176 puffs). Furthermore, in some example embodiments the cell may provide a lower vapour puff count than 80 puffs, for example no more than 50, 60, or 70 puffs (e.g. both cells #1 and #3 provide vapour puff counts of no more than 50 puffs).

Figure 13 illustrates a table which lists charging rates (C-rates) that have been demonstrated for each of the six cells listed in Fig. 9, i.e. cells #1 to #6. As shown in Fig. 13, cells #1, #3 and #4 in particular can support much higher C-rates compared to other cells, notably cells #5 and #6, partly by virtue of their lower capacities compared to cells #5 and #6 (i.e. since the equivalent C-rate for a given current depends on the capacity of the cell). A higher C-rate equates to a lower charge time, hence, cells #1, #3 and #4 can be charged to their capacities more quickly compared to cells #5 and #6 since they can be charged at higher C-rates.

By selecting a supercapacitor cell based on one or more of the criteria described above with reference to Fig. 9 to 13, for use as the power source in an aerosol provision system, the charge time of the aerosol provision system can be further reduced.

Example embodiments have been described in which an aerosol provision system comprises at least one power source comprising at a supercapacitor, for example as described above with reference to Figs. 1 to 8 and cells #1 to #4 in Figs. 9 to 13. Supercapacitors are highly durable compared to alternative technologies, and can operate for in excess of 10,000 cycles. In some such embodiments, the at least one supercapacitor is configured to be operable for a number of charge and discharge cycles greater than or equal to 10,000 cycles, and in some embodiments greater than or equal to 20,000 cycles. The maximum number of charge and discharge cycles to which a cell can be subjected before the cell's performance degrades beyond a defined limit (e.g. a point at which the cell's capacity falls below a certain percentage of its starting capacity when new, or a point at which the cell fails) may be referred to as the "cycle life" or "operating life" of the cell. In some example embodiments, after said number of charge and discharge cycles (e.g. 10,000 cycles, or 20,000 cycles) the at least one supercapacitor is still capable of storing sufficient electrical charge to provide the second power output to the at least one aerosol generator for at least 80 puffs.

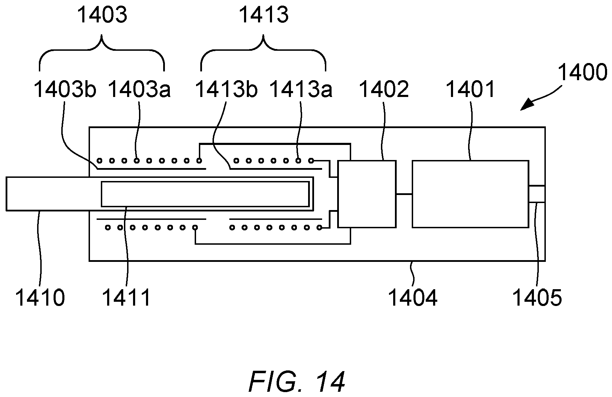

Referring now to Fig. 14, a block diagram of a non-combustible aerosol provision device comprising a plurality of aerosol generators is illustrated, according to an example embodiment. Like the aerosol provision devices 100, 200 of Figs. 1 and 2, the aerosol provision device 200 of Fig. 2 comprises at least one power source 1401, circuitry 1402, a housing 1404, a charging interface 1405, and is configured to receive a consumable 1410 comprising aerosol-generating material 1411. For the sake of brevity, a detailed explanation will not be repeated in relation to similar aspects that are common to the aerosol provision devices 100, 200, 1400 of Figs. 1, 2 and 14.

As with the aerosol provision devices 100, 200 of Figs. 1 and 2, in the aerosol provision device 1400 of Fig. 14 the device 1400 comprises an aerosol generator 1403 in the form of an induction heater comprising an induction coil 1403a and a susceptor 1403b. However, the aerosol provision device 1400 of Fig. 14 differs from those of Figs. 1 and 2 in that the device 1400 further comprises a second aerosol generator 1413. Although two aerosol generators 1403, 1413 are illustrated in the present example embodiment, in some embodiments an aerosol provision device may comprise more than two aerosol generators.

In embodiments such as one shown in Fig. 14, where the aerosol provision device 1400 comprises at least a first aerosol generator 1403 and a second aerosol generator 1403, the first power output may be provided to one of the aerosol generators (e.g. the first aerosol generator 1403) in the first operating mode, whilst the second power output may be provided to the other aerosol generator (e.g. the second aerosol generator 1413) in the second operating mode. In some embodiments, the second power output may be provided to only one of the aerosol generators 1403, 1413 in the second operating mode, whilst in the first operating mode the first power output may be provided to both of the aerosol generators 1403, 1413.

In this way, by providing the first and second power outputs to different aerosol generators 1403, 1413, or to a different combination of one or more aerosol generators (e.g. one aerosol generator in the second operating mode, vs two aerosol generators in the first operating mode), it may be possible to achieve a greater difference in the rate at which aerosol is generated between the first and second operating modes. This may in turn afford greater design flexibility when configuring the aerosol provision device 1400 (e.g. when setting the power levels for the first and second power outputs).

For example, since the first power output is provided by a supercapacitor power source 101, 201a, 1401, a respective one of the aerosol generators 1403, 1413 to which the first power output is provided can be configured so as to be capable of drawing a higher peak current from the supercapacitor power source (e.g. in comparison to a peak current that may be drawn by the other aerosol generator when supplied with the second power output). For instance, a resistance or impedance of the first aerosol generator 1403 may be configured to be lower than a resistance or impedance of the second aerosol generator 1413, such that when the first power output is provided to the first aerosol generator 1403, the first aerosol generator 1403 can take advantage of the ability of the supercapacitor power source 1401 to provide a higher peak current (e.g. compared to a conventional power source such as an LIB).

Purely by way of a hypothetical illustrative example, without being limiting, in an embodiment the second aerosol generator 1413 may comprise a resistive heater in the form of a coil, with an electrical resistance of 0.9 Ohms (Ω). If the second aerosol generator 1413 was supplied with a continuous current (i.e. without power modulation such as PWM or PFM) from an LIB at a voltage of 4.2 V, the peak current delivered to the second aerosol generator 1413 will be 4.2/0.9 = 4.7 A, giving a peak power of 19.6 W. In contrast, if the second aerosol generator 1413 was hypothetically supplied with a continuous current from an LIC at a voltage of 3.8 V, the peak current delivered to the second aerosol generator 1413 will be 3.8/0.9 = 4.2 A, giving a peak power of 16.0 W. However, in this example embodiment the first aerosol generator 1403 is configured to have a lower resistance than the second aerosol generator 1413, for example 0.5 Ω. In this scenario, when the first aerosol generator 1403 is supplied with the first power output from the LIC power source 1401 in the form of a continuous current, the peak current delivered to the first aerosol generator 1403 will be 3.8/0.5 = 7.6 A, giving a peak power of 28.9 W. In contrast, if an LIB was used to supply a continuous current to the first aerosol generator 1403, the lower resistance of the first aerosol generator 1403 could cause the LIB to overheat, potentially reducing the cycle life of the LIB.

Continuing with reference to Fig. 14, in the present example embodiment the second aerosol generator 1413 is also an induction heater, comprising an induction coil 1413a and a susceptor 1413b. Depending on the embodiment, when two induction heaters are provided both susceptors 1403b, 1413b may be included in the device 1400 or both may be included in the consumable 1410. As a further alternative, in some embodiments when two induction heaters are provided one of the susceptors 1403b, 1413b may be included in the device 1400, whilst the other one of the susceptors 1403b, 1413b may be included in the consumable 1410. As yet another alternative, in some embodiments when two induction heaters are provided the aerosol provision system may only comprise a single susceptor, in which case both induction coils 1403a, 1413a may be inductively coupled to the same susceptor 1403b.

Furthermore, although in the present example embodiment both aerosol generators 1403, 1413 are induction heaters, in other embodiments where an aerosol provision device comprises a plurality of aerosol generators, a single device may include different types of aerosol generator. For example, in some embodiments an aerosol provision device may include one aerosol generator in the form of an induction heater, and another aerosol generator in the form of a resistive heater. As yet a further example, in some embodiments an aerosol provision device may comprise one or more first aerosol generators that are configured to generate an aerosol by heating the aerosol-generating material, in combination with one or more second aerosol generators that are configured to generate an aerosol without substantially heating the aerosol-generating material.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein. In addition, this disclosure may include other inventions not presently claimed, but which may be claimed in future.

Aspects of the present invention are set out below in the following numbered clauses, which form part of the description:
Clause 1. An aerosol provision device comprising:
   a first power source configured to supply power to one or more aerosol generators for generating an aerosol from an aerosol-generating material, the first power source comprising a supercapacitor; and
   control circuitry configured to provide a first power output to at least one of the one or more aerosol generators in a first mode of operation of the aerosol provision device and to provide a second power output to at least one of the one or more aerosol generators in a second mode of operation of the aerosol provision device, the first power output being higher than the second power output,
   wherein the control circuitry is configured to provide the first power output from the supercapacitor to said at least one of the one or more aerosol generators in the first mode of operation.
Clause 2. The aerosol provision device of clause 1, comprising:
   a second power source configured to supply power to the one or more aerosol generators for generating the aerosol from the aerosol-generating material,
   wherein the control circuitry is configured to provide the second power output from the second power source to said at least one of the one or more aerosol generators in the second mode of operation.
Clause 3. The aerosol provision device of clause 2, wherein, in the second mode of operation, the control circuitry is configured to provide the second power output to said at least one of the one or more aerosol generators solely from the second power source.
Clause 4. The aerosol provision device of clause 2 or 3, wherein, in the first mode of operation, the control circuitry is configured to provide the first power output to said at least one of the one or more aerosol generators from both the first power source and the second power source.
Clause 5. The aerosol provision device of clause 2 or 3, wherein, in the first mode of operation, the control circuitry is configured to provide the first power output to said at least one of the one or more aerosol generators solely from the first power source.
Clause 6. The aerosol provision device of any one of clauses 2 to 5, wherein the second power source comprises a battery.
Clause 7. The aerosol provision device of clause 6, wherein the battery is a rechargeable lithium-ion battery.
Clause 8. The aerosol provision device of any one of clauses 1 to 7, wherein said one or more aerosol generators comprise a first aerosol generator and a second aerosol generator,
   wherein the control circuitry is configured to provide the first power output to the first aerosol generator in the first mode of operation and to provide the second power output to the second aerosol generator in the second mode of operation.
Clause 9. The aerosol provision device of clause 8, wherein the first aerosol generator is a first type of aerosol generator and the second aerosol generator is a second, different, type of aerosol generator.
Clause 10. The aerosol provision device of any one of clauses 1 to 9, wherein the one or more aerosol generators are configured to generate said aerosol at a rate dependent on a level of power received by the one or more aerosol generators, such that a rate at which said aerosol is generated in the first mode of operation is higher than a rate at which said aerosol is generated in the second mode of operation.
Clause 11. The aerosol provision device of any one of clauses 1 to 10, wherein the control circuitry is configured to provide the first power output to said at least one of the one or more aerosol generators in the first mode of operation during a first time period within a puff on the aerosol provision device or within a heating session, and is configured to provide the second power output to said at least one of the one or more aerosol generators in the second mode of operation during a second time period within said puff or said heating session, the first time period preceding the second time period.
Clause 12. The aerosol provision device of clause 11, wherein the control circuitry is configured to switch from the first operating mode to the second operating mode in dependence on a temperature of one of the one or more aerosol generators.
Clause 13. The aerosol provision device of clause 12, wherein the control circuitry is configured to switch from the first operating mode to the second operating mode in response to the temperature of one of the one or more aerosol generators being greater than or equal to a threshold temperature.
Clause 14. The aerosol provision device of clause 11, wherein the control circuitry is configured to switch from the first operating mode to the second operating mode after a predetermined time period.
Clause 15. The aerosol provision device of any one of clauses 1 to 14, wherein the supercapacitor is a hybrid supercapacitor.
Clause 16. The aerosol provision device of clause 15, wherein the hybrid supercapacitor is a lithium-ion capacitor, LIC.
Clause 17. The aerosol provision device of any one of clauses 1 to 16, wherein at least one of the one or more aerosol generators is a heater configured to heat the aerosol-generating material to form the aerosol.
Clause 18. The aerosol provision device of any one of clauses 1 to 17, wherein at least one of the one or more aerosol generators is configured to generate the aerosol from the aerosol-generating material without substantially heating the aerosol-generating material.
Clause 19. The aerosol provision device of any one of clauses 1 to 18, wherein the aerosol provision device is configured to repeatedly switch between the first operating mode and the second operating mode during a puff, or during a heating session.
Clause 20. The aerosol provision device of any of clauses 1 to 19, comprising:
   at least one of the one or more aerosol generators.
Clause 21. The aerosol provision device of any of clauses 1 to 20, wherein the aerosol provision device is configured to be releasably engageable with a consumable comprising the aerosol-generating material.
Clause 22. The aerosol provision device of clause 21 when dependent on any one of clauses 1 to 19, wherein at least one of the one or more aerosol generators is included in the consumable.
Clause 23. An aerosol provision system comprising:
   the aerosol provision device according to clause 21 or clause 22; and
   the consumable comprising the aerosol-generating material.
Clause 24. A method of operating an aerosol provision device comprising a first power source configured to supply power to one or more aerosol generators for generating an aerosol from an aerosol-generating material, the first power source comprising a supercapacitor, the method comprising:
   in a first mode of operation, providing a first power output from the supercapacitor to at least one of the one or more aerosol generators; and
   in a second mode of operation, providing a second power output to at least one of the one or more aerosol generators, the first power output being higher than the second power output.
Clause 25. A computer program comprising instructions which, when executed by one or more processors, cause said one or more processors to carry out a method according to clause 24.
Clause 26. A non-transitory computer-readable storage medium having stored thereon a computer program according to clause 25.

## Claims

1. An aerosol provision device comprising:
a first power source configured to supply power to one or more aerosol generators for generating an aerosol from an aerosol-generating material, the first power source comprising a supercapacitor; and
control circuitry configured to provide a first power output to at least one of the one or more aerosol generators in a first mode of operation of the aerosol provision device and to provide a second power output to at least one of the one or more aerosol generators in a second mode of operation of the aerosol provision device, the first power output being higher than the second power output,
wherein the control circuitry is configured to provide the first power output from the supercapacitor to said at least one of the one or more aerosol generators in the first mode of operation.

2. The aerosol provision device of claim 1, comprising:
a second power source configured to supply power to the one or more aerosol generators for generating the aerosol from the aerosol-generating material,
wherein the control circuitry is configured to provide the second power output from the second power source to said at least one of the one or more aerosol generators in the second mode of operation.

3. The aerosol provision device of claim 2, wherein, in the second mode of operation, the control circuitry is configured to provide the second power output to said at least one of the one or more aerosol generators solely from the second power source.

4. The aerosol provision device of claim 2 or 3, wherein, in the first mode of operation, the control circuitry is configured to provide the first power output to said at least one of the one or more aerosol generators from both the first power source and the second power source, or
wherein, in the first mode of operation, the control circuitry is configured to provide the first power output to said at least one of the one or more aerosol generators solely from the first power source.

5. The aerosol provision device of any one of claims 2 to 4, wherein the second power source comprises a battery, optionally wherein the battery is a rechargeable lithium-ion battery.

6. The aerosol provision device of any one of claims 1 to 5, wherein said one or more aerosol generators comprise a first aerosol generator and a second aerosol generator,
wherein the control circuitry is configured to provide the first power output to the first aerosol generator in the first mode of operation and to provide the second power output to the second aerosol generator in the second mode of operation.

7. The aerosol provision device of claim 6, wherein the first aerosol generator is a first type of aerosol generator and the second aerosol generator is a second, different, type of aerosol generator.

8. The aerosol provision device of any one of claims 1 to 7, wherein the one or more aerosol generators are configured to generate said aerosol at a rate dependent on a level of power received by the one or more aerosol generators, such that a rate at which said aerosol is generated in the first mode of operation is higher than a rate at which said aerosol is generated in the second mode of operation.

9. The aerosol provision device of any one of claims 1 to 8, wherein the control circuitry is configured to provide the first power output to said at least one of the one or more aerosol generators in the first mode of operation during a first time period within a puff on the aerosol provision device or within a heating session, and is configured to provide the second power output to said at least one of the one or more aerosol generators in the second mode of operation during a second time period within said puff or said heating session, the first time period preceding the second time period.

10. The aerosol provision device of claim 9, wherein the control circuitry is configured to switch from the first operating mode to the second operating mode in dependence on a temperature of one of the one or more aerosol generators, or is configured to switch from the first operating mode to the second operating mode after a predetermined time period.

11. The aerosol provision device of any one of claims 1 to 10, wherein the supercapacitor is a lithium-ion capacitor, LIC.

12. An aerosol provision system comprising:
the aerosol provision device according to any one of claims 1 to 11; and
a consumable comprising the aerosol-generating material,
wherein the aerosol provision device is configured to be releasably engageable with the consumable.

13. A method of operating an aerosol provision device comprising a first power source configured to supply power to one or more aerosol generators for generating an aerosol from an aerosol-generating material, the first power source comprising a supercapacitor, the method comprising:
in a first mode of operation, providing a first power output from the supercapacitor to at least one of the one or more aerosol generators; and
in a second mode of operation, providing a second power output to at least one of the one or more aerosol generators, the first power output being higher than the second power output.

14. A computer program comprising instructions which, when executed by one or more processors, cause said one or more processors to carry out a method according to claim 13.

15. A non-transitory computer-readable storage medium having stored thereon a computer program according to claim 14.
